# EUROPÄISCHE PATENTANMELDUNG

(11) **EP 0 984 599 A2**
(43) Veröffentlichungstag der Anmeldung: **08.03.2000**
(21) Anmeldenummer: 99117215.6
(22) Anmeldetag: 01.09.1999
(51) Int. Cl.: H04L 29/06

(54) **Verfahren und Vorrichtung in einem Datennetz zur Abbildung logischer Namen von Datenverarbeitungssystemen auf Adressen und umgekehrt**

(30) Priorität: 01.09.1998 DE 19839804
(71) Anmelder: SIEMENS AKTIENGESELLSCHAFT, 80333 München (DE)
(72) Erfinder: Ruban, Thomas, 85521 Ottobrunn (DE); Puhl, Alfons, 80802 München (DE); Grimminger, Jochen, 80638 München (DE); Bokämper, Martin, 91099 Poxdorf (DE)

(57) **Zusammenfassung**

Es wird ein Verfahren zur Abbildung von logischen Namen von Datenverarbeitungssystemen auf Netz-Adressen und umgekehrt beschrieben, in einem Datennetz, mit einem in diesem Netz verteilten Datenbanksystem, welches für die Abbildung benötigte Informationen enthält. Die Erfindung betrifft weiterhin eine Vorrichtung zur Durchführung des Verfahrens. Hierfür findet sich im Internet ein Standardmechanismus, den sogenannten Domain Name Service, DNS. Darauf aufbauend kann durch Analyse der Adress-Abfrage zusätzliche Informationen gewonnen werden, aufgrund derer eine Entscheidung getroffen wird, an welches Dienstprogramm im Datennetz diese Adress-Abfrage weitergeleitet werden muß.

## Beschreibung

Die Erfindung betrifft ein Verfahren zur Abbildung von logischen Namen von Datenverarbeitungssystemen auf Netz-Adressen und umgekehrt, in einem Datennetz, mit einem in diesem Netz verteilten Datenbanksystem, welches für die Abbildung benötigte Informationen enthält. Die Erfindung betrifft weiterhin eine Vorrichtung zur Durchführung des Verfahrens.

Menschen ziehen es bei der Benutzung von Computern in der Regel vor, sich einen 'Namen' zu merken gegenüber einer 'Adresse' dieses Rechners im Netz.
Im weit verbreiteten Internet etwa ist eine solche IP-Adresse 32 Bit lang.
Daher wird ein System benötigt, welches eine Umwandlung von sogenannten Host-Namen, also solchen, die vom Menschen lesbar sind, in Netz-Adressen vornimmt.

Hierfür findet sich im Internet ein Standardmechanismus, den sogenannten Domain Name Service, DNS. Dieser Dienst wird inzwischen auch von nahezu jeder Software verwendet, wie Elektronische Post (electronic mail), Datei-Übertragung (ftp) oder Terminalprogramme (telnet).
Eine ausführliche Beschreibung dieses Dienstes findet sich entweder in den RFCs 1034 und 1035, oder in dem Buch 'DNS und BIND' von Paul Albitz und Cricket Liu.

Unter einer Domain versteht man im Weiteren Gruppen von Hosts (Datenverarbeitungssystemen), die in einer logischen Beziehung zueinander stehen, z. B. geographisch (Domain 'de' für Deutschland) oder organisatorisch.

Bei DNS handelt es sich um ein online verteiltes Datenbanksystem, das in der Lage ist, von Menschen lesbare Maschinennamen in Rechneradressen (IP-Adressen) abzubilden.
Die Informationen sind dabei überall im Datennetz verfügbar.
Angesichts der inzwischen ungeheuren Menge an diesbezüglichen Informationen ist die Datenhaltung nicht mehr auf einem zentralen Rechner möglich. DNS übernimmt dabei auch die Aufgabe der Informationsverwaltung und Verteilung.
Die Administration von untergeordneten Subdomains werden dabei delegiert, etwa an die entsprechenden Organisationen.

Das DNS Protokoll wird von DNS-Servern unterstützt. Diese bieten einen hierarchisch geordneten Namensraum, um Firmen und Institutionen die Möglichkeit zu geben, Maschinennamen und Adressen selber zu bestimmen.

Das Format der Dateien, welche die von DNS benötigten Informationen enthalten, ist in RFC 1035 beschrieben. Neben Adresse und Name finden sich in den sogenannten 'Resource Records' weitere Angaben wie 'Kanonischer Name' oder Alias, Host Information (Art des Rechners und des darauf laufenden Betriebssystems), Angaben zur benutzten Mailbox des Rechners und ähnliches. Dabei sind diese Records (Datensätze) in Klassen unterteilt, welche zu bestimmten Netzwerk-Arten gehören (z. B., neben dem Internet als wichtigster Klasse, Hesiod für das MIT).

Die Abbildung von logischen Namen auf Rechneradressen muß nicht eindeutig sein (1:n Abbildung). Dies ist zum Beispiel der Fall bei Informationsdiensten, die in einem 'Informationspool' mehrere Informations-Server bereitstellen, welche die gleichen Daten beinhalten (können). Jeder dieser Server entspricht einer Netz-Adresse (aber nicht unbedingt einem Rechner).

Ein bekanntes Verfahren zur Verteilung von Aufrufen im Fall dieser 1:n Abbildung ist Round Robin DNS. Zum Beispiel in den Produktbeschreibungen der Firma Cisco findet sich eine Erläuterung des Verfahrens. Dabei werden die verschiedenen IP-Adressen nicht zufällig vergeben, sondern nach einer zyklischen Warteschlange, dem sogenannten Round Robin Verfahren. Dieses ermöglicht eine einigermaßen gleichmäßige Verteilung der auftretenden Last auf die vorhandenen Rechnersysteme.

Das DNS Load Balancing Verfahren gewährleistet ebenfalls eine gleichmäßigere Verteilung der Aufrufe. Auch hierzu findet sich eine Beschreibung bei der Firma Cisco.
Das DNS System generiert auf die Anfrage eines Rechnernamens eine Liste der in Frage kommenden Rechner (Hosts), sortiert nach der aktuellen Auslastung. Dies garantiert eine möglichst gleichmäßige Auslastung der zur Verfügung stehenden Systeme.

Aufgabe der Erfindung ist es, eine Verbesserung des bekannten Abbildungsverfahrens anzugeben.

Diese Aufgabe wird gelöst durch ein Verfahren gemäß Anspruch 1 und durch eine Vorrichtung gemäß Anspruch 9.

Dabei wird auf das bereits bekannte DNS Verfahren im Internet aufgesetzt. Eine Abbildungsanfrage von einem Benutzer (dieser kann auch ein Programm oder ein DNS Nameserver sein) kommt bei einem speziellen Programm an, dem sogenannten 'Resolver'.
Dieser stellt die Schnittstelle dar und kann auf die DNS Nameserver zur Ermittlung der gesuchten Adresse zugreifen.
Der Resolver übersetzt in der Regel die Abbildungsanfrage in eine passende Abfrage (z. B. in eine Datenbankquery). Dieser Vorgang kann wie bisher durchgeführt werden.

Bevor nun diese Abfrage (Query) an einen DNS Server abgesendet wird, erfolgt nun eine weitere Analyse der Abtrage. Hierbei werden nun zusätzliche Informationen bewertet, die bislang nicht verwendet und daher in bisherigen Verfahren auch nicht berücksichtigt wurden.

Um aus den zusätzlich gewonnenen Informationen eine Entscheidung treffen zu können, an welchen DNS Server die Abfrage weiter gesendet werden soll, sind weitere Informationen darüber, etwa in Form einer (oder mehrerer) Datenbanken (DB) erforderlich.
Das Entscheidungsverfahren (distribution) kann dabei beispielsweise wie folgt vorgehen:
1.aus der Quelladresse wird der Benutzer bestimmt (eindeutiges Ergebnis),
2.aus den von Benutzer (vorher) ausgewählten Diensten (z. B. Dienste, die einen Zugang zu einem anderen Netz anbieten, wie die 'Internet Service Provider', ISP) wird derjenige ausgewählt, der einen Transport zur gewünschten Zieladresse anbietet,
3.es kann eine Berechtigung des Benutzers zum Aufrufen der gewünschten Zieladresse überprüft werden,
4.unter den möglichen Anbietern wird derjenige ausgesucht, dessen Randparameter (Kosten, Qualität u.v.a.m.) mit den Vorgaben des Nutzers übereinstimmen bzw. am besten übereinstimmen,
5.die Query der Adressanfrage wird an den DNS Server des ausgewählten Anbieters (z. B. an den nächsten DNS Server im Internet) weitergeleitet.

Alle Schritte, die nach der Übergabe der Query an einen nächsten DNS Server von diesem durchgeführt werden, um die passende Adresse zu ermitteln, entsprechen den bisher bekannten Prinzipien des DNS, wie er in den RFCs beschrieben ist, und sind daher nicht Bestandteil der Erfindung.

Die Vorteile der Erfindung liegen vor allem darin, daß alle bereits bekannten Mechanismen und Programme für die Abbildung von Rechneradressen auf logische Rechnernamen auf einfache Weise weiterverwendet werden können. Die Erfindung ist eine Erweiterung und wesentliche Verbesserung des Verfahrens, insbesondere stellt er eine weitere Sicherheitsmaßnahme für Netze gegen unzulässige Zugriffe dar.

Vorteilhafte Ausgestaltungen und Weiterbildungen sind in den Unteransprüchen angegeben.

Dabei wird vor allem auf die Art der zusätzlich verwendeten Informationen eingegangen.

Die zusätzlichen Informationen können zum Beispiel Angaben über den Benutzer enthalten. Diese können für verschiedenartige Zwecke genutzt werden, etwa für die Überprüfung einer Zugangsberechtigung. Weiterhin könnte für den einzelnen Benutzer bereits ein voreingestelltes 'Benutzerprofil' vorliegen, welches weitere Einzelheiten enthält.

Eine weitere Möglichkeit ergibt sich aus der Einbeziehung der Empfängeradresse. Hierbei kann es sich etwa um Adressen eines Corporate Nets handeln, also einem internen Firmennetz. Auch hier ist ein wichtiger Vorteil die Möglichkeit der Überprüfung von der Zugriffsberechtigungen, insbesondere in Kombination mit der Benutzer-Adresse.

Eine weitergehende Informationen ist auch diejenige über die gewünschte Qualität der Übertragungen. Hiermit einher geht neben der Übertragungsrate (also 'Geschwindigkeit' oder Übertragungsdauer) auch der Kostenfaktor. Je höhere Datenraten ein Diensteanbieter (ISP, Internet Service Provider) realisieren kann, desto teurer kann er seine Dienste verkaufen.

Dabei kann zum Beispiel auch ein Load Balancing, wie in der Einleitung beschrieben, durchgeführt werden. Wenn ein erster Benutzer 'user1' einen Informationsdienst aufruft, wird er zu einem langsamen Rechner des Dienstanbieters Daten austauschen (also der Name des Informationsdienst in die Adresse des langsamen Rechners aufgelöst). Wenn dagegen ein zweiter Benutzer 'user2' den selben Informationsdienst benutzen will, bekommt er einen schnellen Rechner zugeteilt.

Die angegebenen Faktoren können sowohl als Absolutwerte, aber auch als Ober- bzw. Untergrenze betrachtet werden (z. B. Minimalqualität, Maximalkosten).

In einer weiteren Ausführungsform wird als zusätzliche Information eine Aussage über die Sicherheit der gewünschten Datenübertragung miteinbezogen. Dieses ist zum Beispiel günstig, wenn zu einer Zieladresse mehrere Server mit verschiedenen Verschlüsselungsverfahren zur Verfügung stehen.

Wie bereits weiter oben erwähnt, kann die Zusatzinformation auch zur Überprüfung der Zulässigkeit von Anfragen verwendet werden. Dieses ist mit dem bisherigen DNS Verfahren nicht möglich.
Dabei können etwa firmeninterne Netze nach außen abgesichert werden, bzw. Zugriffe aus Corporate Nets nach 'draußen' verhindert werden. Auch können zum Beispiel Zugriffe auf Zugangsanbieter, welche nicht von eingetragenen Kunden stammen, abgewiesen werden.

Wenn die Überprüfung aufgrund einer Unzulässigkeit abgewiesen wird, so kann eine Antwort generiert werden, ohne auf einen nächsten DNS Server zugreifen zu müssen. Dieses reduziert die Anzahl der Zugriffe auf die DNS Server und damit die Netzauslastung.

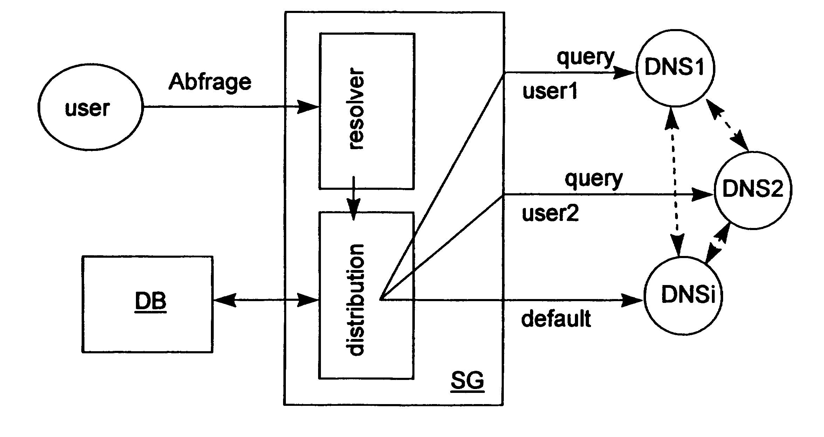

Im folgenden wird die Erfindung anhand von Ausführungsbeispielen erläutert. Dabei zeigt die
Figur 1 den Weg einer Abfrage vom Benutzer bis zum DNS Server, wo die Abfrage dann nach bekannten Prinzipien aufgelöst wird.

Einschränkungen in der Figur und dem Ausführungsbeispiel sind für die Erfindung nicht zwingend.

Eine Abbildungsanfrage (Abfrage) wird von einem Benutzer (user) gestartet. Hierfür kann es sich um eine simple Abfrage handeln, wie das UNIX Kommando 'nslookup', oder etwa ein Datenübertragungswunsch via 'telnet'. Es kann sich aber auch um einen Aufruf handeln, der bereits von einem anderen DNS Server bearbeitet und nach bekannten Mechanismen weitergereicht wurde.

Diese Anfrage wird zu einem Dienstprogramm übermittelt (resolver), welches in einem Netzelement (SG) residiert und die Aufgabe hat, eine Antwort auf die Anfrage zu ermitteln. Dies funktioniert mit Hilfe der sogenannten DNS Server. Um dem DNS Server eine verständliche Anfrage schicken zu können, muß der Resolver (sofern er die Antwort nicht bereits selber geben kann), die Anfrage umformulieren in eine sogenannte 'query'.
Dieses Vorgehen entspricht dem bereits bekannten DNS Verfahren.

Bevor der Resolver jedoch die Query an einen DNS Server weiter geben kann, wird nun eine weitergehende Analyse der übergebenen Informationen durchgeführt (distribution). Dabei werden Angaben berücksichtigt wie Absender und Empfänger, aber auch zusätzliche Informationen über die gewünschte Übertragungsqualität oder die maximal akzeptierten Kosten der Übertragung.

In dem Beispiel, welches in der Figur angegeben ist, besteht die Zusatzinformation aus Angaben über den Absender, also den 'User'.
Um die Zusatzinformation korrekt interpretieren zu können, sind möglicherweise weitere Angaben notwendig. Diese stehen zur Verfügung, in einer eigenen Datenbank (DB) oder auch aus im Netz verteilten Informationsquellen.

Die Entscheidung, zu welchem DNS Server die Abfrage dann weiter geleitet wird, wird in diesem einfachen Fall entschieden anhand der Absenderadresse (also des 'users').

Üser1 ist zum Beispiel nur berechtigt, in einem internen Firmennetz (Corporate Network) Verbindungen aufzubauen, er wird daher an DNS Server (DNS1) verwiesen verwiesen und kann so nur Namen aus dem Firmennetz auflösen. User2 dagegen hat einen Standardzugang zu einem speziellen Diensteanbieter, etwa einer Informationsdatenbank und die Abtrage (query) wird daher zu einem zweiten DNS Server (DNS2) weitergeleitet.

Die Abfrage eines unbekannten Benutzers (default) wird in diesem Beispiel immer an einen dritten DNS Server (DNSi) gesendet, etwa den Standard-DNS Server im Internet.

Hier wäre es auch möglich, daß der 'default' Weg in eine Fehlerbehandlungsroutine führt, in der die Anfrage abgewiesen wird und dem entsprechenden Benutzer / Programm eine Benachrichtigung zugestellt wird.

Die DNS Server sind in der Regel durch das vorhandene Datennetz miteinander verbunden und geben Abfragen auch wie bisher weiter (gestrichelte Pfeile).

Dieses in der Figur dargestellte Beispiel ist beliebig erweiterbar, insbesondere was die Art und Kombination der zusätzlich verwendeten Informationen angeht, und daher nicht für die Erfindung einschränkend.

### Abkürzungsverzeichnis

- BIND: Berkeley Internet Name Domain
- DNS: Domain-Name Service
- ftp: File Transfer Protocol
- IP: Internet Protocol
- ISP: Internet Service Provider
- MIT: Massachusetts Institute of Technology
- RFC: Request for Comments

### Literaturverzeichnis

DNS und BIND
   Paul Albitz & Cricket Liu
   deutsche Ausgabe, 1. Auflage 1997, O'Reilly Verlag
Request for Comments: RFC 1034
   DOMAIN NAMES - CONCEPTS AND FACILITIES
   P. Mockapetris, November 1987
Request for Comments: RFC 1035
   DOMAIN NAMES - IMPLEMENTATION AND SPECIFICATION
   P. Mockapetris, November 1987
Produktbeschreibungen der Firma Cisco zu
   DNS, Round Robin DNS, DNS Load Balancing:
   http://www.cisco.com/

## Patentansprüche

1. Verfahren zur Abbildung von logischen Namen von Datenverarbeitungssystemen auf Netz-Adressen und umgekehrt, in einem Datennetz, mit einem im Netz verteilten Datenbanksystem, welches die für die Abbildung benötigten Informationen enthält, wobei
eine Abbildungsanfrage in einem ersten Netzelement (Resolver) in eine geeignete Abfrage (Query) umformuliert wird, so daß
diese Abfrage von mindestens einem der im Datennetz verteilt existierenden Diensteprogramme (DNS) in geeigneter Weise bearbeitet und/oder weitergeleitet werden kann, um das Abbildungsergebnis zu ermitteln,
dadurch gekennzeichnet, daß
durch Analyse der Abfrage zusätzliche Informationen gewonnen werden, aufgrund derer eine Entscheidung getroffen wird, an welches Dienstprogramm im Datennetz diese Abfrage weitergeleitet werden muß.

2. Verfahren nach Anspruch 1,
dadurch gekennzeichnet, daß
die zusätzlichen Informationen Angaben über den Absender der Abbildungsanfrage enthalten.

3. Verfahren nach einem der vorherigen Ansprüche,
dadurch gekennzeichnet, daß
die zusätzlichen Informationen Angaben über den Empfänger der Abbildungsanfrage enthalten.

4. Verfahren nach einem der vorherigen Ansprüche,
dadurch gekennzeichnet, daß
die zusätzlichen Informationen Angaben über die Qualität des der Abbildungsanfrage zugrundeliegenden Verbindungswunsches enthalten.

5. Verfahren nach einem der vorherigen Ansprüche,
dadurch gekennzeichnet, daß
die zusätzlichen Informationen Angaben über die Sicherheit des der Abbildungsanfrage zugrundeliegenden Verbindungswunsches enthalten.

6. Verfahren nach einem der vorherigen Ansprüche,
dadurch gekennzeichnet, daß
anhand der zusätzlichen Informationen die Zulässigkeit der Anfrage oder des Verbindungsaufbauwunsches geprüft wird.

7. Verfahren nach Anspruch 6,
dadurch gekennzeichnet, daß
bei Erkennen der Unzulässigkeit der Anfrage oder des Verbindungswunsches eine Antwort mit einer Ablehnungsinformation generiert und an das Netzelement (Resolver) zurückgeschickt wird.

8. Verfahren nach einem der vorherigen Ansprüche,
dadurch gekennzeichnet, daß
die Anfrage an ein vordefiniertes Dienstprogramm (default DNS) weitergeleitet wird, wenn aufgrund der zusätzlichen Informationen keine Entscheidung zugunsten eines speziellen Dienstprogrammes getroffen werden kann.

9. Vorrichtung zur Bearbeitung von zusätzlichen Informationen bei der Abbildung von logischen Namen von Datenverarbeitungssystemen auf Netzadressen und umgekehrt (SG), in einem Datennetz, mit einem im Netz verteilten Datenbanksystem, welches die für die Abbildung benötigten Informationen enthält,
mit Mitteln zum Empfang von Abfragen (query) von einem ersten Netzelement (resolver) und
mit Mitteln zum Auswerten der empfangenen Abtrage (distribution) nach zusätzlichen Informationen und
mit Mitteln zum Ermitteln eines geeigneten Diensteprogrammes zur Abbildung (DNS) und
mit Mitteln zum Weitersenden der empfangenen Query zu dem ausgewählten Diensteprogramm.
